# EUROPÄISCHE PATENTANMELDUNG

(11) **EP 3 564 161 A1**
(43) Veröffentlichungstag der Anmeldung: **06.11.2019**
(21) Anmeldenummer: 18405015.1
(22) Anmeldetag: 30.06.2018
(51) Int. Cl.: B65F 1/00

(54) **BEHÄLTER FÜR DIE GETRENNTE ENTSORGUNG VON PAPIER UND ABFALL**

(30) Priorität: 30.04.2018 CH 5492018
(71) Anmelder: Marzi Marchesi, Fausto Silvio Alexander, 8044 Zürich (CH)
(72) Erfinder: Marzi Marchesi, Fausto Silvio Alexander, 8044 Zürich (CH)

(57) **Zusammenfassung**

Der Entsorgungsbehälter bildet eine Einheit bestehend aus zwei Behältern (1,2). Ein Behälter (1) ist für das Entsorgen von Abfall, der andere (2) ist für die Entsorgung von Altpapier vorgesehen. An dem für die Entsorgung von Abfall vorgesehenen Behälter, ist ein abnehmbarer Rahmen angebracht, welcher den Halt der Abfallsäcke im Behälter sichert. Um die Handhabung des Behälters zu erleichtern, ist er mit zwei Griffen (7,8) ausgestattet.

## Beschreibung

### Technisches Gebiet

Die Erfindung betrifft die Altpapier- und Abfallentsorgung in Haushalten und an Arbeitsplätzen.

### Darlegung der Erfindung

### Stand der Technik

Entsorgungsbehälter, zum Beispiel Papierkörbe und Abfalleimer, sind so konzipiert, dass darin gerne jegliche Art von Abfall zusammen mit Altpapier entsorgt wird.

### Nachteile

Wenn Altpapier zusammen mit Abfall entsorgt wird, geht dem Recycling von Altpapier die primäre Ressource abhanden. *"Obwohl für viele Abfallarten ein gut ausgebautes Recyclingangebot besteht, gelangen heute immer noch zu viele rezyklierbare Stoffe in den Abfall. Um die Umweltbelastung weiter zu senken, muss deshalb vermehrt am Anfang der Produktionskette und bei den Konsummustern angesetzt werden." (https:*//*www.bafu.admin.ch*/*bafu*/*de*/*home*/*themen*/*abfall*/*inkuerze.html).* Abfallsäcke welche in Abfalleimer fallen, können einen Mehraufwand an Zeit, Materialien und anderen Ressourcen verursachen.

### Aufgabe

Die Erfindung soll helfen, dass Altpapier nicht zusammen mit Abfall entsorgt wird. Die Erfindung soll eine sichere Befestigung von Abfallsäcken im Entsorgungsbehälter ermöglichen.

Die Erfindung soll eine praktische Handhabung des Entsorgungsbehälters ermöglichen.

### Lösung

Die Aufgabe wird durch die Merkmale des Patentanspruchs 1, 2 und 3 gelöst.

### Kurze Darstellung der Erfindung

Der Entsorgungsbehälter bildet eine Einheit aus zwei separaten Behältern. Ein Behälter wurde für die Entsorgung von Altpapier, der andere Behälter wurde für die Entsorgung von Abfall konzipiert. An dem für die Entsorgung von Abfall vorgesehenen Behälter, ist ein abnehmbarer Rahmen angebracht, welcher den Halt der Abfallsäcke im Behälter sichert. Der Entsorgungsbehälter weisst Griffe auf, welche die Handhabung vereinfachen.

### Aufzählung der Zeichnungen

Die Erfindung wird anhand von Zeichnung näher erläutert, auf diesen ist ersichtlich:
- Fig.1:: Der Entsorgungsbehälter
- Fig.2:: Der Entsorgungsbehälter von oben
- Fig.3:: Der Entsorgungsbehälter von unten
- Fig.4:: Detailansicht von Fig.1, Halterung

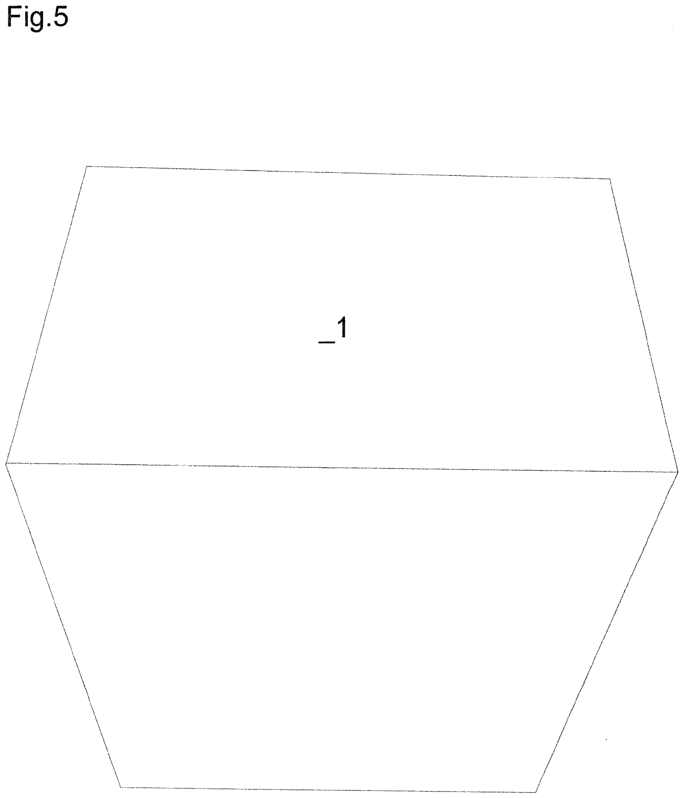

- Fig.5:: Detailansicht von Fig.1, Rahmen

### Detaillierte Beschreibung der Erfindung

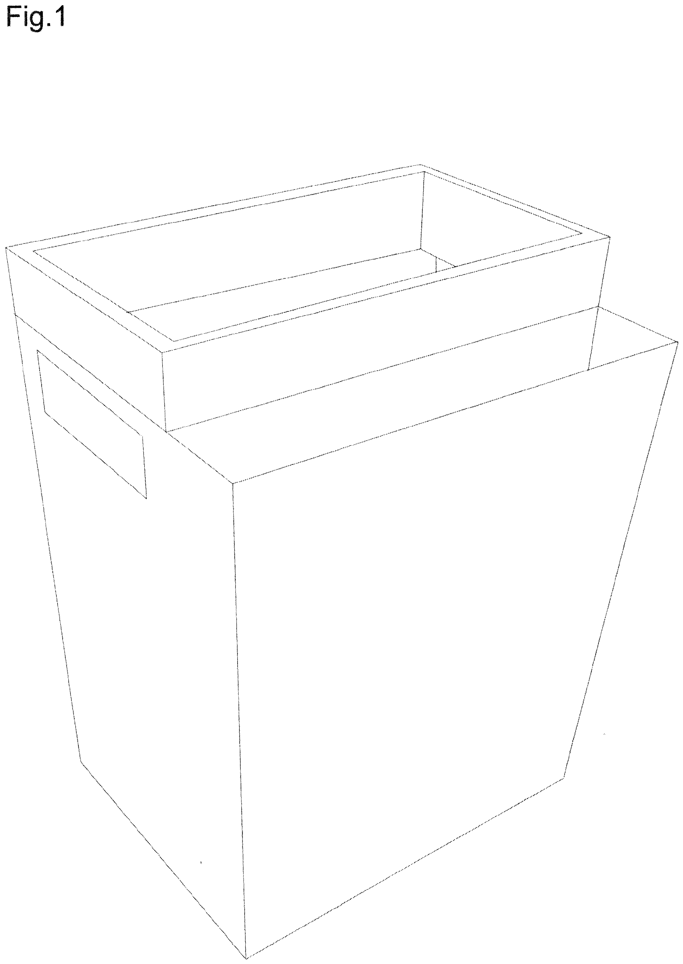

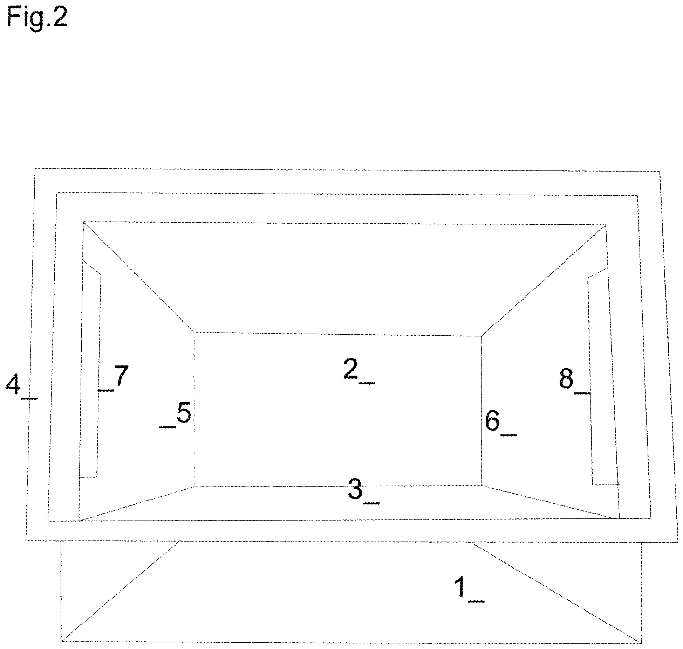

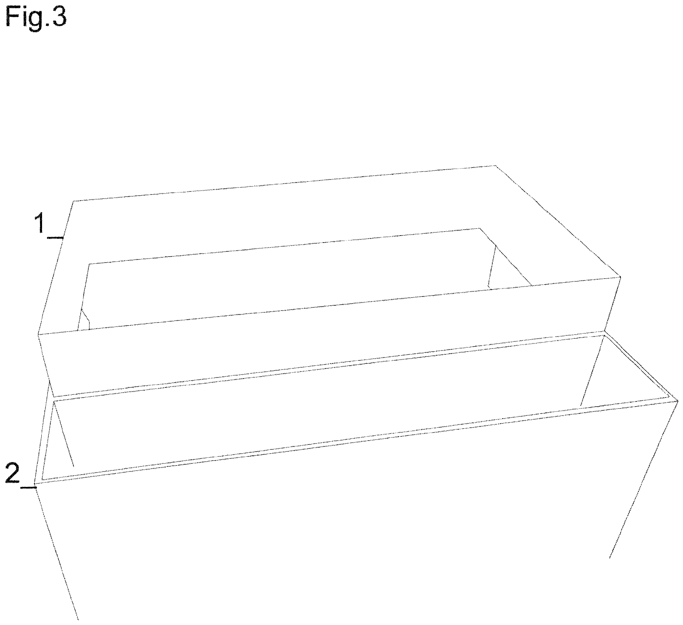

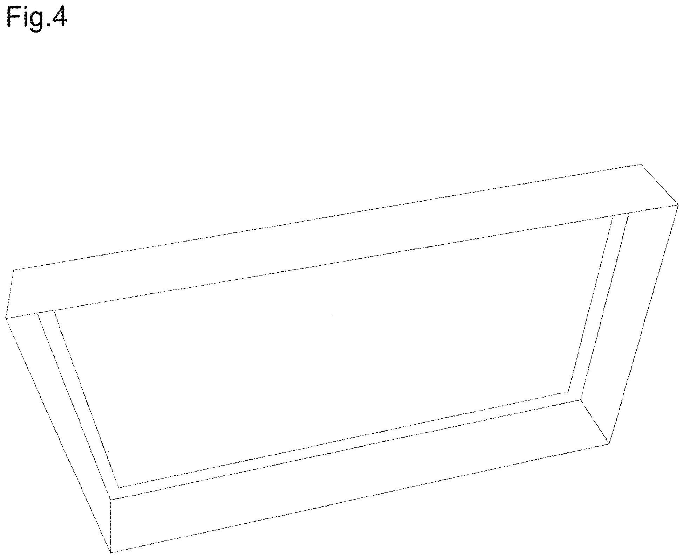

Fig.1 zeigt den Entsorgungsbehälter für die getrennte Entsorgung von Altpapier und Abfall in Haushalten und an Arbeitsplätzen. Der Entsorgungsbehälter besteht aus der Einheit von zwei rechteckigen, nach oben offenen Behältern Fig.2 1 2 welche eine Trennwand 3 aufweisen, sowie aus einem Rahmen 4; Behälter 1 ist für das Altpapier bestimmt, Behälter 2 ist für die Entsorgung des Abfalls bestimmt. Um das Handhaben des Behälters zu erleichtern, befindet sich auf den zwei gegenüberliegenden, rechtwinklig zur Trennwand 3 verlaufenden Wänden 5 6 je eine rechteckige, an diesen horizontal, mittig ausgerichtete und vertikal unter der Innenwand Fig.3 1 anliegende Öffnung Fig.2 7 8, welche als Griff dient. Die Innenwand Fig.3 1 ragt über den Behälter Fig.3 2 hinaus und dient als Halterung für den Rahmen Fig.4. Rahmen und Halterung sichern die Abfallsäcke im Behälter.

## Patentansprüche

1. Entsorgungsbehälter welcher auf Grund von zwei nach oben offenen Behältern, die getrennte Entsorgung von Altpapier und Abfall ermöglicht.

2. Entsorgungsbehälter nach Patentanspruch 1 so gekennzeichnet, dass um Abfallsäcke sicher in den für die Entsorgung von Abfall vorgesehenen Behälter befestigen zu können, dieser einen abnehmbaren Rahmen und eine dafür vorgesehene Halterung aufweist.

3. Entsorgungsbehälter nach Patentanspruch 1 so gekennzeichnet, dass an dessen Seiten zwei Griffe angebracht sind, welche die Handhabung des Entsorgungsbehälters erleichtern.
